# EUROPÄISCHE PATENTSCHRIFT

(11) **EP 3 410 743 B1**
(45) Veröffentlichungstag und Bekanntmachung des Hinweises auf die Patenterteilung: **04.11.2020**
(21) Anmeldenummer: 18166703.1
(22) Anmeldetag: 10.04.2018
(51) Int. Cl.: H04R 25/00

(54) **VERFAHREN ZUR ANPASSUNG DER FIRMWARE EINES HÖRGERÄTES EINES HÖRGERÄTESYSTEMS**
METHOD FOR ADAPTING THE FIRMWARE OF A HEARING AID OF A HEARING AID SYSTEM
PROCÉDÉ DE RÉGLAGE DU MICROLOGICIEL D'UN APPAREIL AUDITIF D'UN SYSTÈME D'APPAREILS DE CORRECTION AUDITIVE

(30) Priorität: 02.06.2017 DE 102017209369
(43) Veröffentlichungstag der Anmeldung: 05.12.2018
(73) Patentinhaber: Sivantos Pte. Ltd., Singapore 539775 (SG)
(72) Erfinder: HEMPEL, Thomas, 91052 Erlangen (DE)
(74) Vertreter: FDST Patentanwälte

(56) Entgegenhaltungen:
- EP-A2- 2 178 315
- CH-A2- 709 679
- DE-A1- 10 053 116
- US-A1- 2011 188 684

## Beschreibung

Die Erfindung bezieht sich auf ein Verfahren nach dem Oberbegriff des Anspruchs 1 zur Anpassung einer Firmware eines Hörgerätes eines Hörgerätesystems. Die Erfindung bezieht sich weiterhin auf ein Hörgerätesystem nach dem Oberbegriff des Anspruchs 6 mit einem Hörgerät.

Ein solches Verfahren und ein solches Hörsystem sind aus EP 2 178 315 A2 bekannt.

Ein Hörgerät dient der Versorgung einer hörgeschädigten Person mit akustischen Umgebungssignalen, die zu einer Kompensation der jeweiligen Hörschädigung entsprechend verarbeitet und insbesondere verstärkt werden. Ein Hörgerät umfasst hierzu üblicherweise einen Eingangswandler, beispielsweise in Form eines Mikrofons, eine Signalverarbeitungseinheit mit einem Verstärker, sowie einen Ausgangswandler. Der Ausgangswandler ist in der Regel als Miniaturlautsprecher realisiert und wird auch als Hörer oder Receiver bezeichnet. Er erzeugt insbesondere akustische Ausgabesignale (d.h. Schall), die zum Gehör des Patienten geleitet werden und dort die gewünschte Hörwahrnehmung erzeugt.

Um den zahlreichen individuellen Bedürfnissen entgegenzukommen, werden unterschiedliche Bauformen von Hörgeräten angeboten. Bei den sogenannten ITE-Hörgeräten (In-the-Ear, auch IDO bzw. In-dem-Ohr) wird ein Gehäuse, welches sämtliche funktionale Komponenten einschließlich des Mikrofons und des Receivers enthält, zumindest teilweise im Gehörgang getragen. CIC-Hörgeräte (Completely-in-Canal) sind den ITE-Hörgeräten ähnlich, werden jedoch vollständig im Gehörgang getragen. Bei BTE-Hörgeräten (Behind-The-Ear, auch Hinter-dem-Ohr bzw. HdO) wird ein Gehäuse mit Komponenten wie einer Batterie und der Signalverarbeitungseinheit hinter dem Ohr getragen. Je nach Ausgestaltung kann der Receiver entweder direkt im Gehörgang des Trägers (sogenannte Ex-Hörer- Hörgeräte oder Receiver-in-the-Canal (RIC)-Hörgeräte). Alternativ ist der Receiver innerhalb des Gehäuses selbst angeordnet. In diesem Fall werden die akustischen Ausgabesignale des Receivers durch einen flexiblen, auch als Tube bezeichneten Schallschlauch vom Gehäuse zum Gehörgang geleitet.

Als Hörgerätesystem wird eine funktionale Einheit bezeichnet, die mindestens ein Hörgerät sowie optional mindestens einer damit zusammenwirkenden Peripherieeinheit, z.B. eine Fernbedienung, ein Programmiergerät oder (bei einem Hörgerät mit einer wiederaufladbaren Batterie) eine Ladestation umfasst. Das Hörgerätesystem kann also im Extremfall nur aus einem Hörgerät selbst gebildet sein, wenn der gesamte zum Betrieb des Hörgeräts erforderliche Funktionsumfang in diesem Hörgerät selbst implementiert ist. In einem anderen Anwendungsfall ist das Hörgerätesystem aus zwei (z.B. zur binauralen Wiedergabe von akustischer Information) zusammenwirkenden Hörgeräten gebildet. In wieder einem anderen Anwendungsfall ist das Hörgerätesystem aus einem Hörgerät oder aus zwei zusammenwirkenden Hörgeräten und mindestens einer Peripherieeinheit der vorstehend beschriebenen Art gebildet. Bei der Peripherieeinheit kann es sich schließlich um ein Softwaremodul (z.B. in Form einer App) handeln, das auf einem Fremdgerät, z.B. einem Smartphone, einem Tablet oder einem Personal Computer, lauffähig installiert ist. In letzterem Fall gehört nur das Softwaremodul zu dem Hörgerätesystem, nicht aber das Fremdgerät, auf dem es abläuft.

Die Schaltungslogik moderner Hörgeräte beruht in der Regel ganz oder teilweise auf programmgesteuerten Steuerbauteilen. Der Funktionsumfang eines solchen Hörgeräts ist somit regelmäßig zumindest zum Teil in Form eines von dem Hörgerätehersteller bereitgestellten Steuerprogramms (Firmware) implementiert, das im Betrieb des Hörgeräts ausgeführt wird. Um eine kontinuierlich störungsfreie und sichere Funktion eines Hörgerätes zu gewährleisten, bieten die jeweiligen Hörgerätehersteller sogenannten Firmware-Updates an. Mittels solcher Updates lassen sich beispielsweise auf dem Hörgerät installierte Programme und Daten aktualisieren, Sicherheitsmängel beheben sowie neue Funktionen nachrüsten oder bestehende Funktionalitäten verbessern.

Zur Aktivierung von Firmware-Updates müssen die jeweiligen Hörgeräteträger üblicherweise einen Hörgeräteakustiker oder einen Audiologen aufsuchen, durch den die Updates auf das jeweilige Hörgerät eingespielt (d.h. in Form von Installationsdateien in einen Speicher des Hörgeräts übertragen) und installiert werden. Dies ist jedoch häufig mit erhöhtem Aufwand - beispielsweise aufgrund eines hierzu wahrzunehmenden Termins beim Audiologen verbunden. Entsprechend vernachlässigen viele Hörgeräteträger ein eben solches "Upgrade" der Gerätesoftware und nehmen statt dessen Einbußen der Hörqualität und/oder der Funktionalität ihres Hörgerätes in Kauf.

Die US 2011/0188684 A1 offenbart ein Verfahren zur Durchführung eines drahtlosen Firmware-Updates eines Hörgerätes. Weiter ist aus der US 6 978 155 B2 ein Verfahren zur Anpassung der Firmware eines ein Handy und ein Hörgerät umfassenden Hörgerätesystems bekannt.

Der Erfindung liegt daher die Aufgabe zugrunde, einen Firmware-Update eines Hörgerätes für den Hörgeräteträger einfacher und nutzerfreundlicher zu gestalten.

Diese Aufgabe wird erfindungsgemäß gelöst durch die Merkmale der Ansprüche 1 und 7. Vorteilhafte Ausgestaltungen der Erfindung sind in den Unteransprüchen und der nachfolgenden Beschreibung dargelegt.

Im Rahmen des erfindungsgemäßen Verfahrens, welches zur Anpassung der Firmware eines Hörgerätes eines Hörgerätesystems angewandt wird, wird ein Firmware-Update für das Hörgerät bereitgestellt. Der Startzeitpunkt für die Einspielung und/oder für die Installation des Firmware-Updates auf dem Hörgerät wird hierbei selbstständig durch das Hörgerätesystem ermittelt, wobei der Startzeitpunkt für die Einspielung und/oder für die Installation des Firmware-Updates in Abhängigkeit von dem Betriebszustand des Hörgerätes ermittelt wird.

Durch die selbstständige Ermittlung des Startzeitpunkts sind sowohl eine Einspielung - also ein Laden eines gegebenenfalls auch zu einem späteren Zeitpunkt zu installierenden Firmware-Updates als auch die Installation des Updates selbst Komforteinbußen für den Hörgeräteträger möglich.

Im Hinblick auf die Bereitstellung des Firmware-Updates existieren im Rahmen der Erfindung verschiedene Möglichkeiten. Eine erste Möglichkeit besteht darin, dass ein Firmware-Update bereits zum Zeitpunkt der Auslieferung bzw. des Verkaufes eines Hörgerätes auf diesem selbst gespeichert ist - diese Möglichkeit ist insbesondere dann zweckmäßig, wenn das Update eine Erweiterung der Hörgerätefunktionalität zum Gegenstand hat, die von dem Hörgeräteträger optional (z.B. nach Bedarf oder im Rahmen einer Lizenzerweiterung aktiviert werden kann). Alternativ kann das Firmware-Update im Rahmen der Erfindung auf das bereits vom Hörgeräteträger genutzte Hörgerät aufgespielt werden und anschließend - unmittelbar nach der Einspielung oder zeitverzögert zu dieser - auf dem Hörgerät installiert werden.

Zweckmäßigerweise wird vorab die Verfügbarkeit eines Firmware-Updates mittels des Hörgerätesystems überprüft. Diese Überprüfung kann im Rahmen der Erfindung mittels des Hörgerätes selbst oder mittels einer Peripherieeinheit der vorstehend genannten Art erfolgen.

In einer bevorzugten Ausführungsform der Erfindung umfasst das Hörgerätesystem zusätzlich zu dem Hörgerät eine App zur Steuerung und Konfiguration des Hörgeräts, wobei diese App auf einem Fremdgerät (z.B. einem Smartphone des Hörgeräteträgers) installiert ist. In diesem Fall wird durch die App vorzugsweise regelmäßig, z.B. durch Zugriff auf einen Server über das Internet, die Verfügbarkeit eines neuen Updates überprüft. Wenn ein neues Update auf dem Server verfügbar ist, wird es zweckmäßigerweise anschließend durch die App auf das Fremdgerät heruntergeladen. Wenn das Hörgerät datenübertragungstechnisch mit dem Fremdgerät gekoppelt ist, wird das Update dann durch die App von dem Fremdgerät auf das Hörgerät übertragen und dort entweder zwischengespeichert (bis ein günstiger Startzeitpunkt für die Installation erreicht ist) oder aber unmittelbar nach der Einspielung installiert.

Der Startzeitpunkt für die Einspielung und/oder für die Installation des Firmware-Updates wird in Abhängigkeit von dem Betriebszustand des Hörgerätes ermittelt. Konkret erfolgt die Ermittlung des Startzeitpunktes anhand von Daten, die den Betriebszustand des Hörgeräts charakterisieren. Als den Betriebszustand charakterisierende Daten werden insbesondere Zeiträume erfasst, in denen das Hörgerät an- oder ausgeschaltet ist. Zusätzlich oder alternativ hierzu werden Zeiträume erfasst, in denen das Hörgerät gegebenenfalls in einem Stromsparmodus geschaltet ist.

In bevorzugter Ausgestaltung werden zusätzlich Zeiträume erfasst, in denen das Hörgerät in bestimmten, für eine Inaktivität des Hörgerätenutzers typischen Hörprogrammen betrieben wird. Mit anderen Worten wird der Startzeitpunkt für die Einspielung und/oder für die Installation des Firmware-Updates vorzugsweise in Abhängigkeit der Zeiträume ermittelt, in denen das Hörgerät nicht oder in einem für eine Inaktivität des Hörgerätenutzers typischen Hörprogramm betrieben wird. Insbesondere werden auch solche Zeiträume als für die Einspielung und/oder für die Installation eines Firmware-Updates geeignet erfasst, in denen der Hörgerätebetrieb nicht durch die Einspielung und/oder durch die Installation des Firmware-Updates gestört oder unerwünscht unterbrochen wird.

Hierzu zählen beispielsweise regelmäßig wiederkehrende Fahrtzeiten in öffentlichen Verkehrsmitteln, wie zum Beispiel der tägliche Arbeits- oder Schulweg oder regelmäßige Dienstreisen. Die Erkennung bzw. die Erfassung solcher Zeiträume kann im Rahmen der Erfindung auf verschiedenen Wegen erfolgen. Vorteilhafterweise werden die Zeiträume durch Nutzung von GPS, durch die Detektion von Bewegung und/oder anhand von typischen Umgebungsgeräuschen erfasst. Ebenfalls von Vorteil ist eine Erfassung von Zeiträumen in öffentlichen Verkehrsmitteln anhand von öffentlichen, also frei verfügbaren Fahrplänen. Steigt ein Hörgeräteträger beispielsweise in ein Verkehrsmittel ein, dessen Ankunftszeit am Zielort aufgrund der Kenntnis des zugrundeliegenden Fahrplanes bekannt ist, so kann das Hörgerätesystem (zweckmäßigerweise mittels einer ihm zugehörigen Peripherieeinheit) den zwischen der Abfahrt und der geplanten Ankunft liegenden Zeitraum erfassen und diesen Zeitraum für die Einspielung und/oder für die Installation eines Firmware-Updates nutzen.

Weiter bevorzugt werden solche Zeiträume als für die Einspielung und/oder für die Installation eines Firmware-Updates geeignet erfasst, in denen kein Datenstreaming auf das Hörgerät erfolgt oder auch Situationen oder Zeiträume, in denen vom Hörgerät empfangene Geräusch typischerweise nicht von Sprache oder Musik dominiert werden.

Erfindungsgemäß werden Zeiträume erfasst, in denen der Hörgeräteträger das Hörgerät nicht im oder am Ohr trägt - diese Information wird beispielsweise durch Beobachtung der auf das Hörgerät wirkenden Beschleunigung mittels eines Beschleunigungssensors oder durch Ausmessung des akustischen Rückkopplungspfades des Hörgerätes erfasst. Aus diesen über einen längeren Zeitraum beobachteten Daten werden durch das Hörgerätesystem Ruhezeiträume ermittelt, in denen der Hörgerätenutzer das Hörgerät typischerweise nicht verwendet oder in denen das Hörgerät das Hörgerät typischerweise kein signifikantes Eingangssignal erhält. Der Startzeitpunkt für die Einspielung und/oder für die Installation des Firmware-Updates auf dem Hörgerät wird dabei durch das Hörgerätesystem derart ermittelt, dass er in einem Ruhezeitraum liegt. In einem besonders zweckmäßigen Anwendungsfall ermittelt das Hörgerätesystem auf diese Weise den typischen Zeitraum der Nachtruhe des Hörgeräteträgers. Die Überspielung und/oder Installation eines zur Verfügung stehenden Firmware-Updates wird dabei durch das Hörgerätesystem bevorzugt zu oder mit vorgegebener Verzögerung nach dem typischen Beginn des Nachtruhezeitraums. In einer verfeinerten Variante dieses Verfahrens wird die Überspielung und/oder Installation eines zur Verfügung stehenden Firmware-Updates zu oder mit vorgegebener Verzögerung nach dem Zeitpunkt gestartet, zu dem der Hörgeräteträger das Hörgerät innerhalb des typischen Nachtruhezeitraums aus dem Ohr nimmt.

Die Einspielung und/oder die Installation eines zur Verfügung stehenden Firmware-Updates werden hierbei durch das Hörgerätesystem vorzugsweise automatisch gestartet.

In einer weiter bevorzugten Ausgestaltung der Erfindung wird der Startzeitpunkt für die Einspielung und/oder für die Installation des Firmware-Updates in Abhängigkeit von dem Ladestatus einer Batterie des Hörgerätes ermittelt. Die Überspielung und/oder Installation eines zur Verfügung stehenden Firmware-Updates wird dabei durch das Hörgerätesystem insbesondere nur dann gestartet, wenn der Ladestatus der Batterie ausreichend hoch ist. Andernfalls wird das Update zurückgestellt und dessen Einspielung und/oder Installation zu einem späteren Zeitpunkt - wenn die Batterie ausreichend geladen ist - durchgeführt.

Weiter bevorzugt wird der Startzeitpunkt für die Einspielung und/oder für die Installation des Firmware-Updates in Abhängigkeit von der Datenübertragungskapazität einer verfügbaren Datenverbindung ermittelt, durch die das Hörgerätesystem mit einem das Firmware-Update bereitstellenden Server verbunden ist. Das Firmware-Update wird dabei insbesondere nur dann auf das Hörgerätesystem heruntergeladen, wenn eine hinreichend leistungsfähige Datenübertragungsverbindung besteht.

In vorteilhafter Ausführung des Verfahrens wird vor der Einspielung und/oder Installation des Firmware-Updates von einer auf dem Hörgerät installierten Ausgangsversion der Firmware eine Sicherungskopie erstellt. Das Firmware-Update wird dabei nach dessen Installation auf Fehler überprüft. Bei Erkennung eines Fehlers wird die Ausgangsversion der Firmware wiederhergestellt, d.h. erneut lauffähig auf dem Hörgerät installiert. Auf diese Weise wird sichergestellt, dass zu jedem Zeitpunkt eine Version des zur Nutzung des Hörgerätes notwendigen Betriebsprogrammes auf dem Hörgerät installiert ist. So ist auch bei gegebenenfalls fehlgeschlagenem Update die Nutzung des Hörgerätes möglich.

In einer weiter bevorzugten Ausgestaltung der Erfindung wird ein Parametersatz, mit dem das Hörgerät unter der Ausgangsversion der Firmware konfiguriert war, nach dem Firmware-Update automatisch wieder eingestellt. Es wird also automatisch sichergestellt, dass das Hörgerät nach dem Firmware-Update mit den gleichen Einstellungen betrieben wird wie vor dem Firmware-Update. Der Parametersatz enthält dabei insbesondere die Konfigurationsdaten zu den individuellen und/oder seitens des Hörgeräteträgers bevorzugten Hörprogrammen. Der Hörkomfort eines Hörgeräteträgers ist somit auch nach einem Firmware-Update ohne Einschränkungen gewährleistet.

Das ein Hörgerät umfassende Hörgerätesystem im Rahmen der Erfindung ist zur selbstständigen Ermittlung des Startzeitpunkts für die Einspielung und/oder für die Installation eines für das Hörgerät bereitgestellten Firmware-Updates auf dem Hörgerät in Abhängigkeit von dem Betriebszustand des Hörgerätes eingerichtet. Das Hörgerätesystem ist mithin zur Durchführung des vorstehend beschriebenen erfindungsgemäßen Verfahrens eingerichtet. Funktionale Ausgestaltungsvarianten des Hörgerätesystems ergeben sich entsprechend aus den vorstehend beschriebenen Ausführungsformen des Verfahrens.

In bevorzugter Ausgestaltung ist das Hörgerätesystem zur selbstständigen Ermittlung eines Startzeitpunkts für die Einspielung und/oder für die Installation eines bereitgestellten Firmware-Updates auf dem Hörgerät in Abhängigkeit der Zeiträume eingerichtet ist, in denen das Hörgerät nicht oder in einem für eine Inaktivität des Hörgerätenutzers typischen Hörprogramm betrieben wird. Hierunter werden vorzugsweise Zeitträume verstanden, in denen der Hörgerätebetrieb nicht durch die Einspielung und/oder durch die Installation des Firmware-Updates gestört oder unerwünscht unterbrochen wird.

Weder muss der Hörgeräteträger selbst zur Einspielung und/oder zur Installation des Updates der auf seinem Hörgerät installierten Firmware tätig werden, noch ist ein Besuch bei einem Hörgeräteakustiker notwendig.

In einer vorteilhaften Ausgestaltung der Erfindung ist das Hörgerät selbst zur selbstständigen Ermittlung des Startzeitpunkts für die Einspielung und/oder für die Installation eines für das Hörgerät bereitgestellten Firmware-Updates eingerichtet (ohne dass hierfür ein Peripheriegerät genutzt würde oder überhaupt vorhanden sein muss).

Alternativ hierzu umfasst das Hörgerätesystem zusätzlich zu dem Hörgerät eine Peripherieeinheit, welche zur selbstständigen Ermittlung des Startzeitpunkts für die Einspielung und/oder für die Installation eines für das Hörgerät bereitgestellten Firmware-Updates eingerichtet ist.

Weitere vorteilhafte Ausgestaltungen für das Hörgerätesystem ergeben sich aus den auf das Verfahren gerichteten Unteransprüchen.

Nachfolgend werden Ausführungsbeispiele der Erfindung anhand einer Zeichnung näher erläutert. Darin zeigen:
- Fig. 1: in schematischer Darstellung ein Hörgerätesystem mit einem Hörgerät und einem Smartphone als Peripheriegerät, sowie
- Fig. 2: in schematischer Darstellung den Verfahrensablauf zur Anpassung der Firmware eines Hörgerätes.

Einander entsprechende Teile und Größen sind in allen Figuren stets mit gleichen Bezugszeichen versehen.

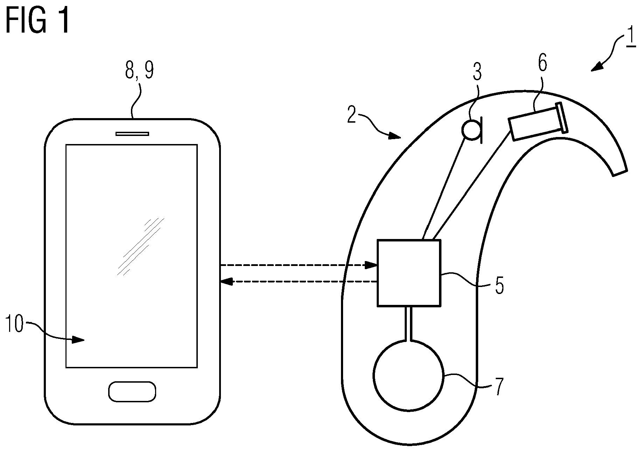

In Fig. 1 ist in schematischer Darstellung ein Hörgerätesystem 1 gezeigt. Das Hörgerätesystem 1 umfasst vorliegend ein hinter dem Ohr zu tragendes Hörgerät 2 mit einem Mikrofonen 3, einer Signalverarbeitungseinheit 5, einem Hörer bzw. Receiver 6 und einer Batterie 7. Weiter umfasst das Hörgerätesystem 1 ein als Smartphone 8 ausgebildetes Peripheriegerät 9.

Das Smartphone 8 und das Hörgerät 2 sind miteinander gekoppelt. Vorliegend ermittelt das Smartphone 8 mittels einer auf diesem installierten App 10 den Startzeitpunkt zur Einspielung eines von dem Hörgerätehersteller auf seiner InternetSeite bereitgestellten Firmware-Updates. Die App 10 startet die Einspielung des Firmware-Updates auf das Hörgerät 2 dann zum ermittelten Startzeitpunkt automatisch.

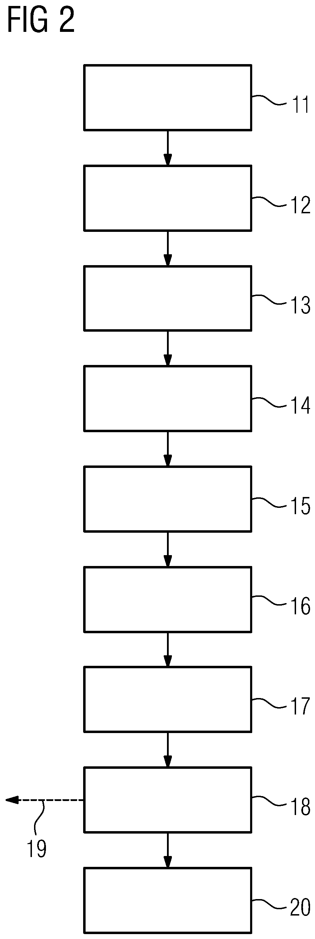

Der detaillierte Verfahrensablauf hierzu ist in Fig. 2 gezeigt. Zu Beginn wird festgestellt, ob ein neues Firmware-Update für das Hörgerät 2 zur Verfügung steht (Schritt 11). Hierzu wird ebenfalls das Smartphone 8 bzw. die App 10 genutzt. Ist ein neues Firmware-Updates für das Hörgerät 2 verfügbar, wird dieses mittels des Smartphones 8 bereitgestellt (Schritt 12). Hierzu lädt das Smartphone 8 bzw. die App 10 das Firmware-Update von der Internetseite des Hörgeräteherstellers herunter. Der Startzeitpunkt zur anschließenden Einspielung des Firmware-Updates auf das Hörgerät 2 wird dann selbstständig durch das Smartphone 8 (als Teil des Hörgerätesystems 1) ermittelt (Schritt 13).

Zur Ermittlung des Startzeitpunkts werden unterschiedliche Daten genutzt, die den Betriebszustand des Hörgeräts 2 charakterisieren. Neben dem Ladestatus der Batterie 7 und der Datenübertragungskapazität einer Datenverbindung des Hörgerätesystems 1 mit einem das Firmware-Update bereitstellenden Server wird insbesondere der Nutzungszustand des Hörgerätes 2 berücksichtigt. Hierzu werden insbesondere die Zeiträume berücksichtigt, in denen das Hörgerät 2 in bestimmten, für eine Inaktivität des Hörgerätenutzers typischen Hörprogrammen betrieben wird.

Die Informationen bezüglich des Nutzungszustandes des Hörgerätes 2 werden insbesondere anhand des üblichen Nutzerverhaltens des Hörgeräteträgers ermittelt. Das übliche Nutzerverhalten beschreibt hierbei, in welchen Zeiträumen der Hörgeräteträger das Hörgerät 2 üblicherweise im oder am Ohr trägt, oder eben auch nicht. Die dieses Nutzerverhaltens beschreibenden Daten werden über einen über einen längeren Zeitraum beobachtet und gespeichert.

Anhand der beobachteten und gespeicherten Daten werden durch das Hörgerätesystem 1 Erwartungswerte ermittelt, die Ruhezeiträume beschreiben, also Zeiträume, in denen der Hörgerätenutzer das Hörgerät 2 typischerweise nicht verwendet oder in denen das Hörgerät 2 typischerweise kein signifikantes Eingangssignal erhält.

Um den Startzeitpunkt zur Überspielung des verfügbaren Firmware-Updates auf das Hörgerät 2 zu ermitteln, wird das aktuelle Nutzerverhalten des Hörgeräteträgers mit den Erwartungswerten korreliert. Nimmt der Hörgeräteträger das Hörgerät 2 beispielsweise zu einem Zeitpunkt aus dem Ohr, der seinem üblichen Nutzerverhalten widerspricht, so wird durch die Korrelation der aktuellen Daten und der entsprechenden Erwartungswerte ermittelt, dass das kein Update eingespielt werden sollte, da davon ausgegangen werden kann, dass es sich um eine außerplanmäßige Nichtnutzung handelt und davon auszugehen ist, dass der Hörgeräteträger sein Hörgerät 2 zeitnah wieder einsetzt und nutzt. Mit anderen Worten stimmt dann das tatsächliche Nutzerverhalten nicht mit den Erwartungswerten überein, so dass das Firmware-Update nicht eingespielt wird.

Stimmen die Erwartungswerte (also das erwartbare Nutzerverhalten) mit den aktuellen Daten (also dem tatsächlichen Nutzerverhalten) überein - wenn beispielsweise eine Nichtnutzung des Hörgerätes 2 innerhalb des typischen Nachtruhezeitraums ermittelt - so ist kann das verfügbare Firmware-Update eingespielt werden. Die Einspielung erfolgt dann durch das Hörgerätesystem 1 zu oder mit vorgegebener Verzögerung nach dem Beginn des Nachtruhezeitraums.

Nach erfolgter Einspielung wird durch das Hörgerätesystem 1 überprüft, ob die Einspielung erfolgreich war (Schritt 15). Sollte die Einspielung fehlerhaft gewesen sein (beispielsweise durch eine fehlerhafte Datenübertragung), so wird das Firmware-Update nicht auf dem Hörgerät 2 installiert. Andernfalls ermittelt das Hörgerätesystem 1, bzw. die App 10 des Smartphones 8 den optimalen Startzeitpunkt zur Installation (Schritt 16).

Hierbei werden analog zu Schritt 14 ebenfalls Faktoren wie der Ladestatus der Batterie 7, das Vorhandensein einer stabilen Datenverbindung und der Betriebszustand des Hörgerätes 2 selbst berücksichtigt. Entsprechend gilt für Ermittlung des Startzeitpunktes für die Installation des zuvor eingespielten Firmware-Updates das vorhergehend beschriebene Prozedere im Hinblick auf die Korrelation des tatsächlichen Nutzerverhaltens mit den aktuellen Nutzerverhalten analog. Stimmt also das tatsächliche Nutzerverhalten mit den Erwartungswerten überein, wird das Firmware-Update - insbesondere verzögert zu dem typischen Beginn des jeweiligen Zeitraums der Nichtnutzung des Hörgerätes 2 überein, so wird das Firmware-Update eingespielt.

Die Installation des entsprechenden Firmware-Updates wird zu dem ermittelten Zeitpunkt innerhalb des jeweiligen Zeitraumes automatisch gestartet und nach erfolgtem Update wieder beendet (Schritt 17). Schließlich wird das installierte Firmware-Update auf Fehler überprüft (Schritt 18). Für den Fall, dass das Firmware-Update fehlerhaft oder fehlgeschlagen ist, die Ausgangsfirmware des Hörgerätes 2 wiederhergestellt (angedeutet durch Pfeil 19). Bei erfolgreich abgeschlossenem Firmware-Update werden abschließend die vor dem Firmware-Update in dem Hörgerätesystem 1 eingestellten Parameter des Hörgerätes 2 (insbesondere die von einem Hörgeräteträger genutzten Hörprogramme) automatisch wieder eingestellt (Schritt 20). Die Firmware eines Hörgerätes 2 lässt sich so ohne Einschränkungen für seinen Träger auf einfache und komfortable Weise anpassen.

Die Erfindung wird an den vorstehend beschriebenen Ausführungsbeispielen besonders deutlich, ist auf diese Ausführungsbeispiele gleichwohl aber nicht beschränkt. Vielmehr können weitere Ausführungsformen der Erfindung aus den Ansprüchen und der vorstehenden Beschreibung abgeleitet werden.

### Bezugszeichenliste

- 1: Hörgerätesystem
- 2: Hörgerät
- 3: Mikrofon
- 5: Signalverarbeitungseinheit
- 6: Receiver
- 7: Batterie
- 8: Smartphone
- 9: Peripheriegerät
- 10: App
- 11: Verfahrensschritt
- 12: Verfahrensschritt
- 13: Verfahrensschritt
- 14: Verfahrensschritt
- 15: Verfahrensschritt
- 16: Verfahrensschritt
- 17: Verfahrensschritt
- 18: Verfahrensschritt
- 19: Verfahrensschritt
- 20: Verfahrensschritt

## Patentansprüche

1. Verfahren zur Anpassung der Firmware eines Hörgerätes (2) eines Hörgerätesystems (1), wobei ein Firmware-Update für das Hörgerät (2) zur Einspielung und/oder zur Installation bereitgestellt wird, wobei ein Startzeitpunkt für die Einspielung und/oder für die Installation des Firmware-Updates auf dem Hörgerät (2) selbstständig durch das Hörgerätesystem (1) ermittelt wird, und wobei der Startzeitpunkt für die Einspielung und/oder für die Installation des Firmware-Updates in Abhängigkeit von dem Betriebszustand des Hörgerätes (2) ermittelt wird,
**dadurch gekennzeichnet,**
**dass** durch Beobachtung von Daten über einen längeren Zeitraum Zeiträume erfasst werden, in denen der Hörgeräteträger das Hörgerät nicht im oder am Ohr trägt, wobei aus diesen Daten durch das Hörgerätesystem Ruhezeiträume ermittelt werden, in denen der Hörgerätenutzer das Hörgerät typischerweise nicht verwendet oder in denen das Hörgerät typischerweise kein signifikantes Eingangssignal erhält, und wobei der Startzeitpunkt für die Einspielung und/oder für die Installation des Firmware-Updates auf dem Hörgerät durch das Hörgerätesystem derart ermittelt wird, dass er in einem Ruhezeitraum liegt.

2. Verfahren nach Anspruch 1,
wobei der Startzeitpunkt für die Einspielung und/oder für die Installation des Firmware-Updates in Abhängigkeit von dem Ladestatus einer Batterie (7) des Hörgerätes (2) ermittelt wird.

3. Verfahren nach Anspruch 1 oder 2,
wobei der Startzeitpunkt für die Einspielung und/oder für die Installation des Firmware-Updates in Abhängigkeit von der Übertragungskapazität einer Datenverbindung des Hörgerätesystems (1) mit einem das Firmware-Update bereitstellenden Server ermittelt wird.

4. Verfahren nach einem der vorhergehenden Ansprüche,
wobei vor der Einspielung und/oder Installation des Firmware-Updates von einer auf dem Hörgerät (2) installierten Ausgangsversion der Firmware eine Sicherungskopie erstellt wird, wobei das Firmware-Update nach dessen Einspielung bzw. Installation auf Fehler überprüft wird, und wobei bei Erkennung eines Fehlers die Ausgangsversion der Firmware auf dem Hörgerät (2) wiederhergestellt wird.

5. Verfahren nach einem der vorhergehenden Ansprüche,
wobei ein vor dem Firmware-Update in dem Hörgerätesystem (1) eingestellter Parametersatz des Hörgerätes (2) nach dem Firmware-Update automatisch wieder eingestellt wird.

6. Hörgerätesystem (1) mit einem Hörgerät (2), wobei das Hörgerätesystem (1) zur selbstständigen Ermittlung eines Startzeitpunkts für die Einspielung und/oder für die Installation eines bereitgestellten Firmware-Updates auf dem Hörgerät (2) in Abhängigkeit von dem Betriebszustand des Hörgerätes (2) eingerichtet ist,
**dadurch gekennzeichnet,**
**dass** das Hörgerätesystem dazu eingerichtet ist, durch Beobachtung von Daten über einen längeren Zeitraum Zeiträume zu erfassen, in denen der Hörgeräteträger das Hörgerät nicht im oder am Ohr trägt, aus diesen Daten Ruhezeiträume zu ermitteln, in denen der Hörgerätenutzer das Hörgerät typischerweise nicht verwendet oder in denen das Hörgerät typischerweise kein signifikantes Eingangssignal erhält, und den Startzeitpunkt für die Einspielung und/oder für die Installation des Firmware-Updates auf dem Hörgerät durch das Hörgerätesystem derart zu ermitteln, dass er in einem Ruhezeitraum liegt.

7. Hörgerätesystem (1) nach Anspruch 6,
wobei das Hörgerät (2) zur selbstständigen Ermittlung des Startzeitpunkts für die Einspielung und/oder für die Installation eines für das Hörgerät (2) bereitgestellten Firmware-Updates eingerichtet ist.

8. Hörgerätesystem (1) nach Anspruch 6 oder 7,
umfassend zusätzlich ein Peripheriegerät (9), welches zur selbstständigen Ermittlung des Startzeitpunkts für die Einspielung und/oder für die Installation eines für das Hörgerät (2) bereitgestellten Firmware-Updates eingerichtet ist.

## Claims

1. Method for adapting the firmware of a hearing aid (2) of a hearing aid system (1), wherein a firmware update is provided for the hearing aid (2) for loading and/or installation, wherein a start time for the loading and/or for the installation of the firmware update on the hearing aid (2) is determined independently by the hearing aid system (1), and wherein the start time for the loading and/or for the installation of the firmware update is determined depending on the operating state of the hearing aid (2),
**characterized in that**
by observing data over a longer period of time, periods of time are captured in which the hearing aid user does not wear the hearing aid in or on the ear, that from these data, rest periods are determined by the hearing aid system in which the hearing aid user typically does not use the hearing aid or in which the hearing aid typically does not receive a significant input signal, and that the start time for the loading and/or for the installation of the firmware update on the hearing aid is determined by the hearing aid system in such way that it lies in a rest period.

2. Method according to claim 1,
wherein the start time for the loading and/or for the installation of the firmware update is determined depending on the charging state of a battery (7) of the hearing aid (2).

3. Method according to claim 1 or 2,
wherein the start time for the loading and/or for the installation of the firmware update is determined depending on the transmission capacity of a data connection of the hearing system (1) to a server providing the firmware update.

4. Method according to one of the preceding claims,
wherein before the firmware update is loaded and/or installed, a backup copy of an initial version of the firmware installed on the hearing aid (2) is created, wherein the firmware update is checked for errors after completion of its loading, respectively its installation, and wherein the original version of the firmware is restored on the hearing aid (2) if an error is detected.

5. Method according to one of the preceding claims,
wherein a parameter set of the hearing aid (2) set in the hearing aid system (1) before the firmware update is automatically re-set after the firmware update.

6. Hearing aid system (1) with a hearing aid (2),
wherein the hearing aid system (1) is configured to independently determine a start time for the loading and/or for the installation of a provided firmware update on the hearing aid (2) depending on the operating state of the hearing aid (2),
**characterized in**
**that** the hearing aid system is configures to detect periods of time in which the hearing aid user does not wear the hearing aid in or on the ear by observing data over a longer period of time, to determine from these data rest periods in which the hearing aid user typically does not use the hearing aid or in which the hearing aid typically does not receive a significant input signal, and to determine the start time for the loading and/or for the installation of the firmware update on the hearing aid by the hearing aid system in such way that it lies in a rest period.

7. Hearing aid system (1) according to claim 6,
wherein the hearing aid (2) is configured to independently determine the start time for the loading and/or the installation of a firmware update provided for the hearing aid (2).

8. Hearing aid system (1) according to claim 6 or 7,
additionally comprising a peripheral device (9), which is configured to independently determine the start time for the loading and/or for the installation of a firmware update provided for the hearing aid (2).

## Revendications

1. Procédé d'adaptation du mirologiciel d'une aide auditive (2) d'un système d'aide auditive (1), dans lequel une mise à jour du mirologiciel est prévue pour l'aide auditive (2) pour l'importation et/ou l'installation, dans lequel une heure de début pour l'importation et/ou pour l'installation de la mise à jour du mirologiciel sur l'aide auditive (2) est déterminé indépendamment par le système d'aide auditive (1), et dans lequel l'heure de début pour l'importation et/ou pour l'installation de la mise à jour du mirologiciel est déterminé en fonction de l'état de fonctionnement de l'aide auditive (2),
characterisé en ce
que, en observant les données sur une période plus longue, des périodes sont enregistrées pendant lesquelles l'utilisateur de l'aide auditive ne porte pas l'aide auditive dans ou sur l'oreille, qu'à partir de ces données des périodes de repos sont déterminées par le système d'aide auditive, pendant lesquelles l'utilisateur de l'aide auditive n'utilise typiquement pas l'aide auditive ou pendant lesquelles l'aide auditive ne reçoit typiquement pas de signal d'entrée significatif, et que l'heure de début pour de l'importation et/ou de l'installation de la mise à jour du mirologiciel sur l'aide auditive est déterminée par le système d'aide auditive de telle sorte qu'elle se situe dans une période de repos.

2. Procédé selon la revendication 1,
dans lequel l'heure de début de l'importation et/ou de l'installation de la mise à jour du mirologiciel est déterminée en fonction de l'état de charge d'une batterie (7) de l'aide auditive (2).

3. Procédé selon la revendication 1 ou 2,
dans lequel l'heure de début de l'importation et/ou de l'installation de la mise à jour du mirologiciel est déterminée en fonction de la capacité de transmission d'une connexion de données du système d'aide auditive (1) avec un serveur fournissant la mise à jour du mirologiciel.

4. Procédé selon l'une des revendications précédentes,
dans lequel, avant l'importation et/ou l'installation de la mise à jour du mirologiciel, une copie de sauvegarde d'une version initiale du mirologiciel installé sur l'aide auditive (2) est crée, dans lequel la mise à jour du mirologiciel est vérifiée après son importation, respectivement son installation, pour détecter les erreurs, et dans lequel la version initiale du mirologiciel est restaurée sur l'aide auditive (2) si une erreur est détectée.

5. Procédé selon l'une des revendications précédentes,
dans lequel un ensemble de paramètres de l'aide auditive (2) réglé dans le système d'aide auditive (1) avant la mise à jour du mirologiciel est automatiquement réglé à nouveau après la mise à jour du mirologiciel.

6. Système d'aide auditive (1) avec une aide auditive (2),
dans lequel le système d'aide auditive (1) est configuré pour déterminer indépendamment une heure de début de l'importation et/ou de l'installation d'une mise à jour de mirologiciel fournie sur l'aide auditive (2) en fonction de l'état de fonctionnement de l'aide auditive (2),
**caractérisé en ce**
**que** le système d'aide auditive est configuré pour détecter les périodes pendant lesquelles l'utilisateur de l'aide auditive ne porte pas l'aide auditive dans ou sur l'oreille en observant les données sur une période plus longue, pour déterminer à partir de ces données les périodes de repos pendant lesquelles l'utilisateur de l'aide auditive n'utilise typiquement pas l'aide auditive ou pendant lesquelles l'aide auditive ne reçoit typiquement pas de signal d'entrée significatif, et pour déterminer l'heure de début de l'importation et/ou de l'installation de la mise à jour du mirologiciel sur l'aide auditive par le système d'aide auditive de telle sorte qu'elle se situe dans une période de repos.

7. Système d'aide auditive (1) selon la revendication 6,
dans lequel l'aide auditive (2) est configurée pour déterminer indépendamment l'heure de début de l'importation et/ou de linstallation d'une mise à jour du mirologiciel fourni pour l'aide auditive (2).

8. Système d'aide auditive (1) selon la revendication 6 ou 7,
comprenant en outre un dispositif périphérique (9), qui est configuré pour déterminer de manière indépendante l'heure de début de l'importation et/ou de l'installation d'une mise à jour du mirologiciel fourni pour l'aide auditive (2).
